# EUROPÄISCHE PATENTSCHRIFT

(11) **EP 4 122 304 B1**
(45) Veröffentlichungstag und Bekanntmachung des Hinweises auf die Patenterteilung: **12.03.2025**
(21) Anmeldenummer: 22185114.0
(22) Anmeldetag: 15.07.2022
(51) Int. Cl.: A01B 63/22, A01B 63/111

(54) **LANDWIRTSCHAFTLICHE ARBEITSMASCHINE**
AGRICULTURAL MACHINE
MACHINE DE TRAVAIL AGRICOLE

(30) Priorität: 22.07.2021 DE 102021118963
(43) Veröffentlichungstag der Anmeldung: 25.01.2023
(73) Patentinhaber: Pöttinger Landtechnik GmbH, 4710 Grieskirchen (AT)
(72) Erfinder: BERGER, Thomas, 4710 Grieskirchen (AT); MEINDLHUMER, Wilhelm, 4710 Grieskirchen (AT)
(74) Vertreter: Thoma, Michael

(56) Entgegenhaltungen:
- EP-A1- 3 434 089
- DE-A1- 3 411 161
- US-A- 5 450 908
- US-A1- 2004 016 556

## Beschreibung

Die vorliegende Erfindung betrifft eine landwirtschaftliche Arbeitsmaschine mit zumindest einem Arbeitsaggregat, zumindest einem Abstützfahrwerk zur Tiefenführung des Arbeitsaggregats, sowie einer hydraulischen Arbeitstiefen-Einstellvorrichtung zum Einstellen der Arbeitstiefe des Arbeitsaggregats mittels Höhenverstellung von Abstützfahrwerk und Arbeitsaggregat relativ zueinander, wobei über die Arbeitsbreite des Arbeitsaggregats verteilt zumindest zwei Verstellelemente zum Höhenverstellen von Abstützfahrwerk und Arbeitsaggregat relativ zueinander vorgesehen sind.

Um bei landwirtschaftlichen Arbeitsmaschinen die Arbeitstiefe der Arbeitsaggregate während des Arbeitsbetriebs einstellen zu können, oder zumindest ohne Absteigen vom Schlepper einstellen zu können, werden gerne hydraulische Arbeitstiefen-Einstellvorrichtungen verwendet, die meist Hydraulikzylinder umfassen, um das Abstützfahrwerk relativ zum Arbeitsaggregat höhenverstellen zu können. Üblicherweise wird dabei ein dem Arbeitsaggregat nachlaufendes oder bisweilen auch vorauslaufendes Abstützfahrwerk relativ zum Maschinenrahmen höhenverstellt, wobei das Abstützfahrwerk mittels einer Lenkeranordnung höhenverschwenkbar gelagert sein kann und der Hydraulikzylinder sich einerseits am Maschinenrahmen und andererseits am Abstützfahrwerk bzw. dessen verschwenkbarer Aufhängung abstützen kann. Der Hydraulikzylinder erstreckt sich dabei meistens in einer aufrechten, fahrtrichtungsparallelen Ebene, um beispielsweise durch Ausfahren der Kolbenstange das Abstützfahrwerk nach unten spreizen bzw. treiben zu können, um die Arbeitstiefe zu verringern bzw. durch Einfahren der Kolbenstange das Abtastfahrwerk höher zu stellen und damit die Arbeitstiefe zu vergrößern, vgl. US 2004/0016556 A1, 3 434 089 A1 und DE3411161A1.

Alternativ oder zusätzlich zu einer Höhenverstellung des Abstützfahrwerks relativ zum Maschinenrahmen kann bisweilen aber auch das Arbeitsaggregat selbst relativ zum Maschinenrahmen und damit relativ zum Abstützfahrwerk höhenverstellt werden, wobei auch hier verschiedene höhenverstellbare Aufhängungen des Arbeitsaggregats bekannt sind, beispielsweise Linearführungen oder schwenkbare Lenkeraufhängungen. Auch hier können Hydraulikzylinder am Maschinenrahmen und am Arbeitsaggregat abgestützt sein, um die Arbeitstiefe des Arbeitsaggregats verstellen zu können.

Als Abstützfahrwerk werden gerne Walzen wie beispielsweise Packerwalzen verwendet, die zusätzlich zur Arbeitstiefeneinstellung auch noch andere Bearbeitungsaufgaben wie beispielsweise ein Verdichten des Bodens oder ein Vergleichmäßigen bzw. Zerkrümeln von Erdbrocken ausführen können. Grundsätzlich können aber auch andere Abstützfahrwerke wie Reifen- bzw. Räderfahrwerke, die gleichzeitig zum Straßentransport dienen können, oder auch Gleitteller oder ähnliches eingesetzt werden.

Bei Arbeitsmaschinen größerer Arbeitsbreite ist es nicht ganz einfach, die Arbeitstiefe gleichmäßig über die gesamte Arbeitsbreite einzustellen. Üblicherweise werden bei größeren Arbeitsbreiten mehrere Verstellelemente über die Arbeitsbreite verteilt angeordnet, um an verschiedenen Stellen über die Arbeitsbreite verteilt eine Höhen- bzw. Tiefenführung zu haben. Dabei werden mehrere Hydraulikzylinder in der oben genannten Weise angeordnet, wobei eine synchrone bzw. gleichmäßige Verstellung der Hydraulikzylinder durch verschiedene Maßnahmen erreicht werden kann, beispielsweise hydraulische Mengenteiler, Einbinden eines Teilungszylinders, Master-Slave-Systeme oder auch Einschwenkclips, was nicht nur relativ aufwändig ist und die Teilezahl erhöht, sondern auch zusätzliches Gewicht bringt und im Falle der Einschwenkclips keine stufenlose Verstellung zulässt. Zudem ergibt sich auch eine Kollisionsproblematik, wenn die Arbeitsaggregate zusammen mit der hydraulischen Einstellvorrichtung aus einer abgesenkten Arbeitsstellung in eine aufrechte Transport- bzw. Vorgewendestellung ausgehoben werden können, da die hydraulischen Einstellvorrichtungen üblicherweise an der Oberseite und damit in der Transportstellung an der Innenseite vorstehen, so dass mit dort angeordneten Maschinenkomponenten wie beispielsweise einem Saatguttank eine Kollisionsproblematik entsteht.

Die genannte Problematik der gleichmäßigen Arbeitstiefeneinstellung über die Arbeitsbreite verschärft sich nochmals, wenn die Arbeitsmaschine in mehrere Aggregatsteile unterteilt ist, was bei größeren Arbeitsbreiten einerseits hilfreich ist, um die Bodenanpassung beim Überfahren von kupiertem Gelände zu verbessern, da sich die separaten Aggregatsteile individuell an die Hangneigung bzw. Bodenwellen anpassen können. Zum anderen ist eine Unterteilung in mehrere Aggregatsteile oft auch notwendig, um beispielsweise durch das vorgenannte Aufschwenken in eine aufrechte Transportstellung die zulässige Straßentransportbreite einhalten zu können. Oftmals besitzt die Arbeitsmaschine hierzu seitlich rechts und links auskragende Arbeitsaggregats-Flügel, die um eine liegende, näherungsweise fahrtrichtungsparallele Schwenkachse in der genannten Weise zwischen abgesenkter Arbeitsstellung und angehobener Transport- bzw. Vorgewendestellung verschwenkt werden können.

Wird für eine solche mehrgliedrige Arbeitsmaschine eine hydraulische Einstellvorrichtung zum Einstellen der Arbeitstiefe vorgesehen, ist die Vergleichmäßigung der Einstellung aufgrund der Vielzahl an Hydraulikzylindern schwierig bzw. zumindest aufwändig.

Die Schrift DE 10 2008 024 279 B4 zeigt eine landwirtschaftliche Bodenbearbeitungsmaschine, deren Arbeitsaggregat in einen Mittelteil und zwei Seitenflügel unterteilt ist, wobei dem Mittelteil zwei Hydraulikzylinder zur Einstellung der Arbeitstiefe zugeordnet sind und den beiden Seitenflügeln jeweils ein Hydraulikzylinder zum Einstellen der Arbeitstiefe zugeordnet ist. Dabei sind die beiden Hydraulikzylinder, die die Arbeitstiefeneinstellung des Mittelteils bewirken, in Reihe geschaltet, wobei der Hydraulikschaltkreis für die Hydraulikzylinder der Seitenflügel dazu parallel geschaltet ist, wobei entweder für die beiden Hydraulikzylinder des Mittelteils oder für die Hydraulikzylinder der Seitenflügel Gleichlaufzylinder Verwendung finden sollen, um die Verstellung zu vergleichmäßigen. Die Verstellung der Seitenflügel mit jeweils nur einem Hydraulikzylinder funktioniert jedoch nur bei relativ kleinen Arbeitsbreiten der Seitenflügel zufriedenstellend. Besitzen auch die Seitenflügel größere Arbeitsbreiten, müssen auch diese an mehreren Stellen bzw. mittels mehrerer Verstellelemente über die Arbeitsbreite verteilt höhenverstellt werden, um eine gleichmäßige Arbeitstiefeneinstellung zu erzielen, was dann den Steuerungsaufwand für die Vielzahl an Hydraulikzylindern nochmals verkompliziert.

Hiervon ausgehend liegt der vorliegenden Erfindung die Aufgabe zugrunde, eine verbesserte landwirtschaftliche Arbeitsmaschine zu schaffen, die Nachteile des Standes der Technik vermeidet und letzteren in vorteilhafter Weise weiterbildet. Insbesondere soll auf bei größeren Arbeitsbreiten eine gleichmäßige, präzise Arbeitstiefeneinstellung erreicht werden, ohne aufwändige hydraulische Steuerungsmaßnahmen für die diversen Hydraulikzylinder vorsehen zu müssen, wobei nichtsdestotrotz eine stufenlose Einstellung der Arbeitstiefe ohne Absteigen vom Traktor ermöglicht werden soll, anders als die beispielsweise bei den bekannten Einschwenkclips der Fall ist.

Erfindungsgemäß wird die genannte Aufgabe durch eine landwirtschaftliche Arbeitsmaschine gemäß Anspruch 1 gelöst. Bevorzugte Ausgestaltungen der Erfindung sind Gegenstand der abhängigen Ansprüche.

Es wird also vorgeschlagen, mehrere in Richtung der Arbeitsbreite beabstandete Verstellpunkte hinsichtlich der hydraulischen Betätigung zusammenzufassen und von einem Hydraulikzylinder die Verstellbewegung dort ausführen zu lassen. Erfindungsgemäß besitzt die hydraulische Einstellvorrichtung einen Hydraulikzylinder, der zum Betätigen der zumindest zwei, in Arbeitsbreitenrichtung verteilt angeordneten Verstellelemente über ein Gestänge mit den genannten zumindest zwei Stellelementen verbunden ist. Durch das Betätigen mehrerer Verstellelemente mittels eines Hydraulikzylinders kann mit einer geringeren Zylinderanzahl gearbeitet werden und dennoch eine Vergleichmäßigung der Arbeitstiefeneinstellung erzielt werden. Insbesondere kann auf eine zusätzliche, komplexe Ventiltechnik wie Teilungszylinder, Mengenteiler und dergleichen verzichtet werden und dennoch eine synchrone Arbeitstiefenverstellung an mehreren Verstellpunkten der Arbeitsbreite erzielt werden. Im Vergleich zu den eingangs erwähnten Einschwenkclips ist vorteilhafterweise eine stufenlose Einstellung der Arbeitstiefe möglich, wobei kein Absteigen vom Schlepper nötig wird.

Um die Anbindung an die mehreren über die Arbeitsbreite verteilten Verstellelemente in platzsparender, kompakter Bauweise zu erreichen, ist der Hydraulikzylinder vorteilhafterweise liegend quer zur Fahrtrichtung angeordnet. Wenn der Arbeitsaggregatsteil und der zugehörige Teil des Abstützfahrwerks, dem die vom Hydraulikzylinder betätigbaren Verstellelemente zugeordnet sind, sich in seiner abgesenkten Arbeitsstellung befinden, erstreckt sich der genannte Hydraulikzylinder mit seiner Längs- und Verstellachse liegend quer zur Fahrtrichtung, so dass der Hydraulikzylinder in der Höhe wenig aufträgt und, wenn der entsprechende Maschinenteil in eine aufrechte Transportstellung aufgeklappt werden kann, keine Kollisionsproblematik zur Innenseite hin generiert.

Um bei der genannten Zylinderausrichtung die Stellbewegung des Hydraulikzylinders, die sich in der abgesenkten Arbeitsstellung des Aggregatsteils liegend quer zur Fahrtrichtung erstreckt, in eine Auf- und Abbewegung der Stellelemente zu transformieren, ist das genannte Gestänge mit den Stellelementen jeweils über eine Getriebestufe verbunden, die die Stellbewegung des Gestelles liegend quer zur Fahrtrichtung in Auf- und Abwärtsbewegungen der Stellelemente umsetzt.

Die genannten Getriebestufen zur Umlenkung der Gestänge-Stellbewegungen in passende Stellbewegungen der Stellelemente, die im Wesentlichen in zueinander senkrechten Ebenen ausgerichtet sein bzw. erfolgen können, können grundsätzlich verschieden ausgebildet sein, beispielsweise Schwenkhebel oder Kurbelstufen umfassen. In vorteilhafter Weiterbildung der Erfindung jedoch kann die genannte Getriebestufe zwischen Gestänge und Stellelement eine Keilstellfläche zum Umsetzen einer liegenden Gestängebewegung in eine aufrechte Stellelementebewegung umfassen. Die genannte Keilstellfläche kann dabei mit dem Gestänge verbunden und vom Gestänge linear hin und her bewegt werden, um ein auf der Keilstellfläche abgleitendes oder abrollendes Verstellelement, das in Richtung der Bewegung der Keilstellfläche fixiert, quer dazu jedoch beweglich gelagert ist, zu bewegen und damit die Arbeitstiefe zu verstellen. In kinematischer Umkehrung wäre es aber auch möglich, an dem auf- und ab zu bewegenden Verstellelement eine Keilstellfläche vorzusehen und ein starr am Gestänge fixiertes Eingriffsteil wie beispielsweise eine Eingriffsrolle über die Keilfläche fahren bzw. gleiten zu lassen, wenn das Gestänge quer zur Bewegungsachse des Verstellelements verstellt wird.

Die genannte Keilstellfläche kann einseitig wirkend ausgebildet sein, da üblicherweise das Maschinengewicht ausreichend ist, um die Arbeitswerkzeuge relativ zum Abstützfahrwerk nach unten zu drücken bzw. umgekehrt die Bodenaufstandskräfte das Abstützfahrwerk nach oben treiben, so dass die genannte Keilstellfläche mit dem Gegeneingriffselement in Eingriff gehalten wird. Alternativ kann die Keilstellfläche aber auch doppelt wirkend ausgebildet sein, beispielsweise in Form einer Längsnut und/oder einer Kulissenführung, deren Flanken als "schiefe Ebene" bzw. Keilfläche ausgebildet sind, so dass das Verstellelement über die doppelt wirkenden Keilstellflächen in entgegengesetzten Richtungen zwangsgeführt ist.

Der Hydraulikzylinder, der über das genannte Gestänge die mehreren in Arbeitsbreite voneinander beabstandeten Verstellelemente betätigt, kann in vorteilhafter Weiterbildung der Erfindung als Gleichlaufzylinder ausgebildet sein, der zwei zu gegenüberliegenden Seiten hin vorspringende Kolbenstangen aufweist, so dass der Gleichlaufzylinder zwei gleich große Ringkammern besitzt und in beiden Stellrichtungen gleiche Fluid- bzw. Ölverdrängungen aufweist.

Die zu gegenüberliegenden Seiten hin vorspringenden Kolbenstangen können jeweils mit einem der genannten Stellelemente gekoppelt sein, insbesondere über die zuvor genannte Getriebestufe beispielsweise in Form der Keilstellfläche, so dass jede Kolbenstange ein jeweils anderes Verstellelement betätigen kann. In vorteilhafter Weiterbildung der Erfindung kann der genannte Gleichlaufzylinder zwischen den beiden angebundenen Verstellelementen positioniert sein, insbesondere etwa auf einer Verbindungslinie, die die beiden Verstellelemente miteinander verbindet. Hierdurch kann eine besonders kompakte Bauweise erzielt werden.

Die genannten Kolbenstangen des Gleichlaufzylinders können starr miteinander verbunden sein, so dass die auf einer Seite vorstehende Kolbenstange einfährt, wenn die auf der anderen Seite vorstehende Kolbenstange ausfährt. Für eine solche gleichlaufende Stellbewegung der zu gegenüberliegenden Seiten hin vorstehenden Kolbenstangen können die zuvor genannten Getriebestufen gleichsinnig ausgebildet sein. Im Fall der genannten Keilstellflächen können diese in gleicher Richtung geneigt angestellt sein.

Das genannte Gestänge, über das der Hydraulikzylinder mit den Stellelementen gekoppelt ist, kann von den Kolbenstangen des Gleichlaufzylinders selbst gebildet sein, so dass die Verstellelemente bzw. die zwischengeschalteten Getriebeelemente beispielsweise in Form der Keilflächen direkt an den Kolbenstangen angebracht werden können. Wird alternativ ein Hydraulikzylinder mit nur einer Kolbenstange verwendet, kann dennoch die Kolbenstange mit den zwei voneinander beabstandeten Verstellelementen gekoppelt sein, wobei in diesem Fall der Hydraulikzylinder nicht zwischen den anzubindenden Verstellelementen, sondern so positioniert wird, dass beide bzw. alle Verstellelemente auf der Seite der einen Kolbenstange liegen.

Grundsätzlich ist es aber auch möglich, ein von der Kolbenstange des Hydraulikzylinders separates Gestänge zur Übertragung der Stellbewegung des Hydraulikzylinders zu verwenden und das Gestänge über ein Kupplungsstück an die Kolbenstange oder umgekehrt den Zylinder des Hydraulikzylinders anzubinden. Beispielsweise kann das Ende der Kolbenstange über ein Gelenkauge ein Verbindungsstück hin und her treiben, das mit dem Gestänge starr verbunden oder ebenfalls über ein Gelenkauge zug- und schubfest verbunden sein kann. Beispielsweise kann ein separates Gestänge eine Verbindungsstange umfassen, die die Keilstellflächen zweier beabstandeter Verstellelemente miteinander verbindet und zusätzlich in der genannten Weise mit der Kolbenstange des dazu parallel angeordneten Hydraulikzylinders gekoppelt wird.

Das genannte Arbeitsaggregat und das zugehörige Abstützfahrwerk können zueinander parallel angeordnete Aggregats- und Fahrwerksträger umfassen, wobei der genannte Hydraulikzylinder zur Arbeitstiefenverstellung zwischen dem Aggregatsträger und dem Fahrwerksträger im Wesentlichen parallel dazu angeordnet sein kann. Hierdurch wird eine besonders kompakte und auch geschützte Bauweise erzielt, die den Hydraulikzylinder vor Fremdkörpereinwirkungen schützt.

An dem Aggregatsträger können die Arbeitswerkzeuge des Arbeitsaggregats gelagert sein. An dem Fahrwerksträger können die Bodeneingriffselemente des Fahrwerks wie beispielsweise Packerräder, Stützräder oder Gleichteller gelagert sein.

Vorteilhaftweise kann das Abstützfahrwerk mittels einer Schwenklenkeraufhängung höhenbeweglich am Maschinenrahmen der Arbeitsmaschine oder direkt am Aggregatsträger, der die Arbeitswerkzeuge des Arbeitsaggregats trägt, höhenbeweglich angelenkt sein. Die genannte Schwenklenkeraufhängung kann beispielsweise als Viergelenksaufhängung ausgebildet sein, beispielsweise in Form einer Parallelogrammlenkeraufhängung, wobei jedoch auch zueinander spitzwinklig angestellte Lenker und/oder unterschiedlich lange Lenker vorgesehen sein können.

Die genannten Verstellelemente, die von dem gemeinsamen Hydraulikzylinder her betätigbar sind, können in Weiterbildung der Erfindung an den Lenkern der Aufhängung des Abstützfahrwerks angreifen, um das Abstützfahrwerk mittels Höhenverstellung der Aufhängungslenker relativ zum Arbeitsaggregat höher bzw. tiefer zu stellen.

Ist das Arbeitsaggregat in mehrere Aggregatsteile, beispielweise einen Mittelteil und zwei Seitenflügel, unterteilt, kann das Abstützfahrwerk in entsprechender Weise unterteilt sein und für jeden der Aggregatsteile einen Fahrwerksteil umfassen. Im Falle solcher mehreren Aggregatsteile kann zur Arbeitstiefeneinstellung jedem Aggregatsteil ein eigener Hydraulikzylinder zugeordnet sein, der in der genannten Weise jeweils mehrere Verstellelemente pro Aggregatsteil betätigen kann, um die Arbeitstiefe des jeweiligen Aggregatsteils gleichmäßig einstellen zu können.

Um die Hydraulikzylinder verschiedener Aggregatsteile aufeinander abgestimmt, insbesondere synchron zueinander zu betätigen, um eine gleichmäßige Arbeitstiefeneinstellung der mehreren Aggregatsteile zu erzielen, können die Hydraulikzylinder in hydraulischer Abhängigkeit voneinander an das Hydrauliksystem angebunden sein, so dass die Verstellung des einen Hydraulikzylinders eine entsprechende Verstellung des anderen Hydraulikzylinders erzwingt. Insbesondere können die beiden oder die mehreren Hydraulikzylinder nach dem Prinzip einer Master-Slave-Anordnung miteinander verbunden sein, so dass aus dem Masterzylinder verdrängtes Hydraulikfluid eine Stellbewegung des daran angebundenen Slave-Zylinders erzwingt.

Die landwirtschaftliche Arbeitsmaschine kann insbesondere als Bodenbearbeitungsgerät beispielsweise in Form eines Grubbers oder einer Egge ausgebildet sein, beispielsweise in Form einer Zinkenkreiselegge, wobei die Bodenbearbeitungswerkzeuge beispielsweise durch eine nachlaufende Packerwalze in der Arbeitstiefe eingestellt werden können.

Die Erfindung wird nachfolgend anhand eines bevorzugten Ausführungsbeispiels und zugehörigen Zeichnungen näher erläutert. In den Zeichnungen zeigen:
- Fig. 1: eine Draufsicht auf eine landwirtschaftliche Arbeitsmaschine nach einer vorteilhaften Ausführung der Erfindung, deren Arbeitsaggregat als Kreiselegge mit dem aufrechte Achsen umlaufenden Zinkenkreiseln ausgebildet ist, wobei als Abstützfahrwerk eine Packerradwalze vorgesehen ist, die gegenüber dem Arbeitsaggregat höhenverstellbar ist, um die Arbeitstiefe der Zinkenkreisel einzustellen,
- Fig. 2: eine Schnittansicht der landwirtschaftlichen Arbeitsmaschine entlang der Linie A-A in Fig. 1, die einen Schnitt durch die hydraulische Arbeitstiefeneinstellvorrichtung zeigt,
- Fig. 3: eine teilgeschnittene Seitenansicht der Arbeitsmaschine aus den vorhergehenden Figuren, bei der für einen Arbeitsaggregatsteil das zugehörige Abstützfahrwerk weggeschnitten ist und die hydraulische Arbeitstiefen-Einstellvorrichtung frontal zu sehen ist,
- Fig. 4: eine perspektivische Teilansicht des Arbeitsaggregats der Arbeitsmaschine gemäß der Erfindung, aus den vorhergehenden Figuren und der hydraulischen Arbeitstiefeneinstellvorrichtung in einem Blickwinkel schräg von unten, wobei die Anbindung der Kolbenstangen des Gleichlaufzylinders an die beiden Keilflächen-Getriebestufen im Bereich der Verstellelemente zum Höhenverstellen des Abstützfahrwerks zu sehen ist,
- Fig. 5: eine perspektivische Seitenansicht des Arbeitsaggregats und des Abstützfahrwerks schräg von außen, die die Lenkeraufhängung des Abstützfahrwerks am Aggregatsträger und das Keilstellflächenstück im Bereich der Aufhängung zeigt, und
- Fig. 6: die hydraulische Master-Slave-Verschaltung der beiden Hydraulikzylinder zum Einstellen der Arbeitstiefe der beiden Aggregatsteile der Arbeitsmaschine aus den vorhergehenden Figuren.

Wie die Figuren zeigen, kann die landwirtschaftliche Arbeitsmaschine 1 in Form eines Bodenbearbeitungsgeräts ausgebildet sein, wobei grundsätzlich aber auch eine Ausbildung als Grünlandgerät beispielsweise in Form eines Mergers oder einer Heuwerbungsmaschine in Betracht käme. Unabhängig hiervon kann die Arbeitsmaschine 1 als Anbaugerät zum Anbauen eines Schleppers ausgebildet sein und eine Anbauvorrichtung beispielsweise in Form eines Anbaubocks 2 aufweisen, der mittels einer Dreipunktanlenkung mit Ober- und Unterlenkern an den Schlepper anbindbar ist.

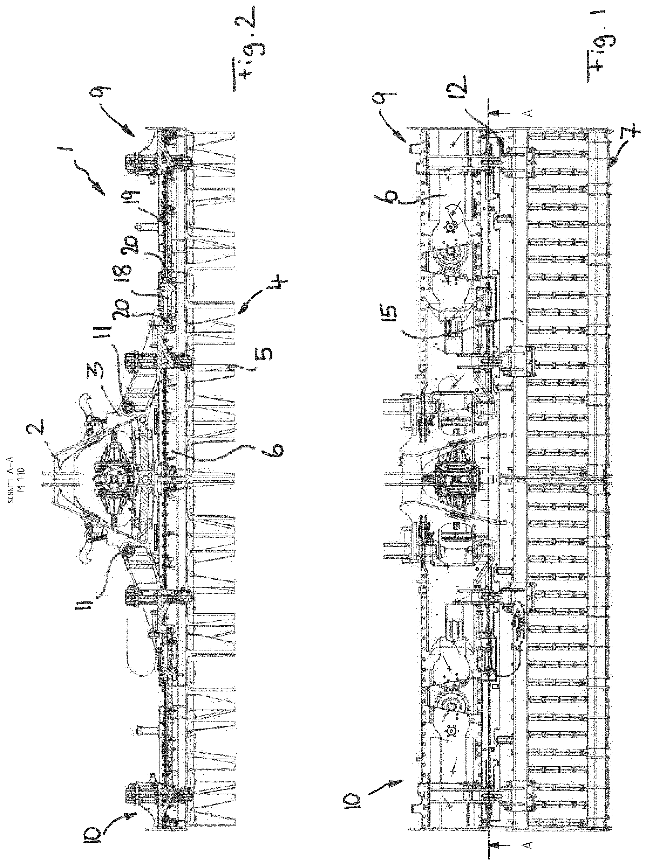

Der mit der Anbauvorrichtung verbundene Maschinenrahmen 3 trägt zumindest ein Arbeitsaggregat 4 zum Ausführen der bestimmungsgemäßen Maschinenfunktion, das eine oder mehrere Reihen von Arbeitswerkzeugen 5 umfassen kann, die sich nebeneinander quer zur Fahrtrichtung angeordnet sein können, vgl. Fig. 1 und Fig. 2.

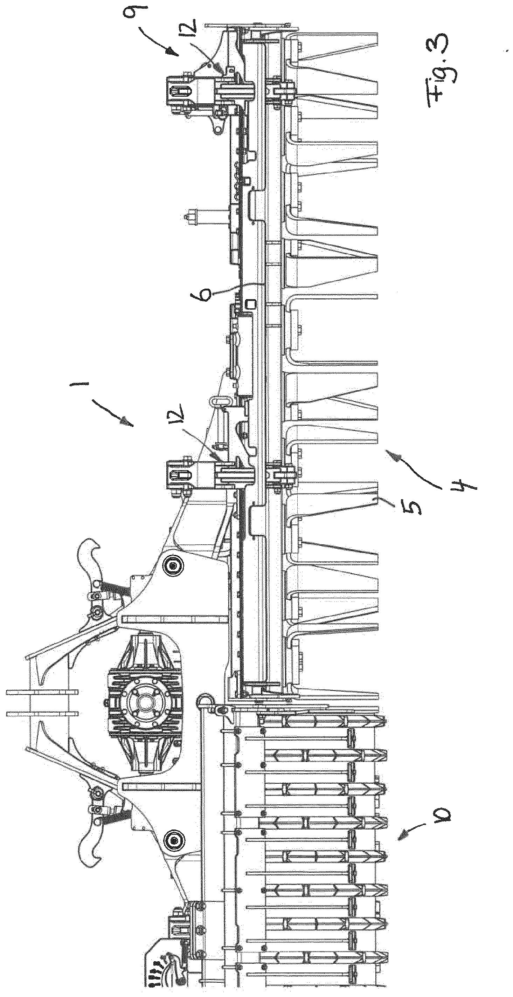

Beispielsweise kann die Arbeitsmaschine 1 als Kreiselegge ausgebildet sein, deren Arbeitsaggregat 4 als Arbeitswerkzeuge 5 um aufrechte Achsen umlaufend antreibbare Kreiselzinken aufweisen kann, vgl. Fig. 2 und 3.

Die Arbeitswerkzeuge 5 können dabei an einem Aggregatsträger 6 aufgehängt sein, der sich in der Arbeitsstellung liegend quer zur Fahrtrichtung erstrecken kann.

Ein Abstützfahrwerk 7 kann dem Arbeitsaggregat 4 nachlaufend angeordnet sein und beispielsweise eine Ackerrad- oder Ringreifenwalze 8 umfassen, die nicht nur das Arbeitsaggregat 4 abstützt und dessen Arbeitstiefe einstellt, sondern auch eine eigene Bodenbearbeitungsfunktion beispielsweise in Form einer Verdichtung ausführen kann.

Wie die Figuren 1 und 3 verdeutlichen, können das Arbeitsaggregat 4 und das Abstützfahrwerk 7 in mehrere Aggregatsteile und Fahrwerksteile unterteilt sein, beispielsweise in rechte und linke Seitenflügel 9 und 10, die aus der abgesenkten Arbeitsstellung, die in den Figuren dargestellt ist, um liegende, etwa fahrtrichtungsparallele Schwenkachsen 11 mittels einer Aushubvorrichtung beispielsweise umfassend einen nicht gezeigten Hydraulikzylinder in eine aufrecht stehende Transportstellung aushebbar sein können, um die Straßentransportbreite zu verringern. Wie die Figuren 2 und 3 zeigen, können hierzu die zuvor genannten Aggregatsträger 6 entsprechend unterteilt und jeweils mittels eines Tragarms an den genannten Schwenkachsen 11 aufgehängt sein.

Das Abstützfahrwerk 7 kann ähnlich dem Arbeitsaggregat 4 unterteilt und an diesem gelagert sein, insbesondere an den genannten Abschnitten des Aggregatsträgers 6, so dass das Abstützfahrwerk 7 zusammen mit dem Arbeitsaggregat 4 in die genannte Transport- und/oder Vorgewendestellung aushebbar ist.

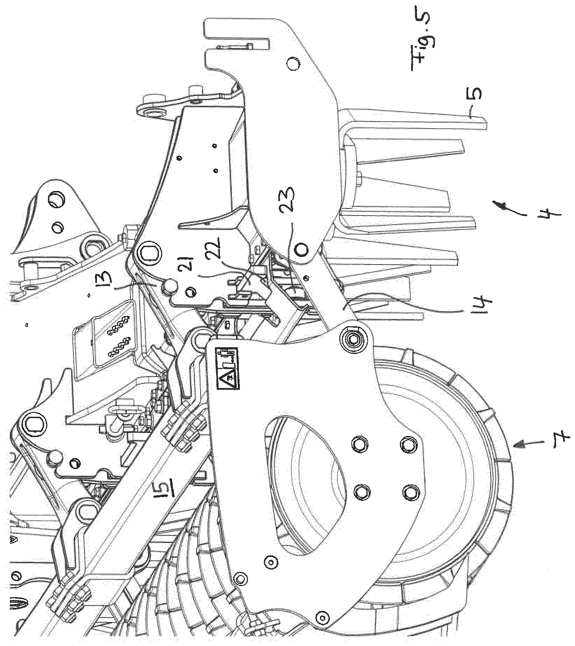

Wie Fig. 5 verdeutlicht, kann die Aufhängung 12 des Abstützfahrwerks 7 relativ zum Arbeitsaggregat 4 höhenverstellbar ausgebildet sein, um die relative Höhe des Abstützfahrwerks 7 zum Arbeitsaggregat 4 verändern zu können.

Die Aufhängung 12 kann als Schwenklenker-Aufhängung ausgebildet sein, insbesondere einen oder mehrere Schwenklenker 13, 14 aufweisen, die einerseits an einem Fahrwerksträger 15 und andererseits am Aggregatsträger 6 gelenkig, insbesondere schwenkbar angelenkt sein können. Die Schwenkachsen der genannten Aufhängungslenker 13, 14 können sich in der abgesenkten Arbeitsstellung liegend quer zur Fahrtrichtung erstrecken.

Um die Höhe des Abstützfahrwerks 7 relativ zum Arbeitsaggregat 4 verstellen zu können, ist eine hydraulische Arbeitstiefen-Einstellvorrichtung 16 vorgesehen, die die Arbeitstiefe des Arbeitsaggregats 4 stufenlos verstellen kann und hierzu die Höhe des Abstützfahrwerks 7 relativ zum Arbeitsaggregat 4 stufenlos variieren kann.

Die hydraulische Arbeitstiefen-Einstellvorrichtung 16 umfasst über die Arbeitsbreite des Arbeitsaggregats 4 verteilt angeordnete Verstellelemente 17, wobei bei der vorgenannten Unterteilung des Arbeitsaggregats 4 und des Abstützfahrwerks 7 in mehrere Teile, insbesondere die genannten Seitenflügel 9 und 10, jeweils zumindest zwei Verstellelemente 17 pro Aggregatsteil bzw. Abstützfahrwerksteil vorgesehen sein können. Die Verstellelemente 17 können voneinander in einem Abstand angeordnet sein, der beispielsweise zumindest ein Drittel oder auch mehr als die Hälfte der Arbeitsbreite des Arbeitsaggregats 4 bzw. des Aggregatsteils betragen kann.

Die genannten Verstellelemente 17 können vorteilhafterweise der Aufhängung 12, insbesondere deren Aufhängungslenkern 13, 14 zugeordnet sein, um die Höhenverstellung im Bereich der Aufhängungslenker 13, 14 zu bewirken.

Die Verstellelemente 17, die einem Aggregats- bzw. Abstützfahrwerksteil zugeordnet sind, können von einem gemeinsamen Hydraulikzylinder 18 betätigt werden, der mit den genannten Verstellelementen 17 durch ein Gestänge 19 gekoppelt ist.

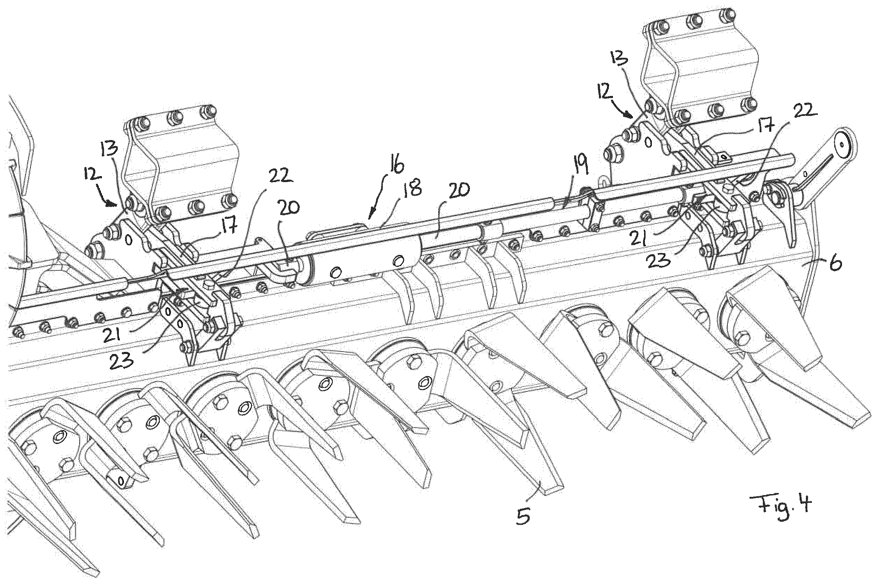

Wie die Figuren zeigen, kann sich der Hydraulikzylinder 18 etwa parallel zu dem Aggregatsträger 6 und/oder zu dem Fahrwerksträger 15 erstrecken, wobei vorteilhafterweise der Hydraulikzylinder 18 im Bereich zwischen den genannten Aggregats- und Abstützfahrwerksträgern 15 angeordnet sein kann, vgl. Fig. 1 in Verbindung mit den Figuren 2 und 4. In der abgesenkten Arbeitsstellung des Arbeitsaggregats 4 kann sich der Hydraulikzylinder 18 liegend quer zur Fahrtrichtung erstrecken.

Vorteilhaferweise kann der Hydraulikzylinder 18 als Gleichlaufzylinder ausgebildet sein und zwei zu gegenüberliegenden Seiten hin vorstehende Kolbenstangen 20 besitzen, die im Gleichlauf miteinander relativ zum Zylinder des Hydraulikzylinders verstellbar sind, also bei der in Fig. 2 gezeigten liegenden Ausrichtung des Hydraulikzylinders 18 beide entweder nach rechts oder beide entweder nach links fahrbar sein können. Die Kolbenstangen 20 können an einem gemeinsamen Kolben befestigt sein, so dass der Gleichlaufzylinder 2 etwa gleich große Ringkammern besitzt, durch deren Beaufschlagung die Kolbenstangen 20 wahlweise nach links oder rechts fahrbar sind.

Die Kolbenstangen 20 können das genannte Gestänge 19 bilden. Alternativ kann aber auch ein von den Kolbenstangen 20 separates Gestänge vorgesehen sein, wobei in diesem Fall ein Hydraulikzylinder mit nur einer Kolbenstange auf einer Seite ausreichend sein kann, welche dann an das separate Gestänge gekoppelt ist und das Gestänge in entgegengesetzte Richtungen hin und her verschieben kann.

Wie Fig. 2 und Fig. 4 zeigen, kann das Gestänge 19, das wie gesagt von den Kolbenstangen 20 gebildet sein kann, über eine Getriebestufe 21 mit den Verstellelementen 17 gekoppelt sein, um die Stellbewegung des Gestänges 19 in eine dazu näherungsweise senkrechte Stellbewegung der Verstellelemente 17 zu transformieren. Das Gestänge 19 kann in der abgesenkten Arbeitsstellung liegend quer zur Fahrtrichtung hin und her verfahren werden, wobei diese liegende Verstellbewegung des Gestänges 19 durch die Getriebestufen 21 in Auf- und Abbewegungen der Verstellelemente 17 umgesetzt werden.

Hierzu können die Getriebestufen 21 im Form von verfahrbaren Schlitten ausgebildet sein, die Keilstellflächen 22 besitzen, die gegenüber der Bewegungsrichtung des Gestänges 19 und/oder der Kolbenstangen 20 spitzwinklig geneigt angestellt sein können. Insbesondere können sich die genannten Keilstellflächen 22 in einer aufrechten Ebene erstrecken, die die Kolbenstangen 20 und/oder das Gestänge 19 enthält und/oder dazu parallel ausgerichtet ist.

Mit den genannten Keilstellflächen 22 können Eingriffselemente 23 beispielsweise in Form von Eingriffsrollen in Eingriff stehen, die mit den Verstellelementen 17 verbunden bzw. daran fest angebracht sein können, um auf der jeweiligen Keilstellfläche 22 abzugleiten bzw. abzurollen. Die Eingriffselemente 23 und die Verstellelemente 17 können in der abgesenkten Arbeitsstellung in aufrechter Richtung verstellbar geführt, in Richtung liegend quer zur Fahrtrichtung jedoch fixiert sein, so dass eine Stellbewegung der Keilstellflächen 22 eine Auf- und Abbewegung der Eingriffselemente 23 und damit der Verstellelemente 17 zur Folge hat. Hierdurch verstellt sich die Höhe des Abstützfahrwerks 7 gegenüber dem Arbeitsaggregat 4.

Wie die Figuren zeigen, kann der Hydraulikzylinder 18 in vorteilhafter Weise zwischen den Verstellelementen 17 positioniert sein, insbesondere auf einer Verbindungslinie, die die Verstellelemente 17 verbindet.

In der Ausführungsform gemäß den Zeichnungen verstellt ein Hydraulikzylinder 18 zwei Verstellelemente 17. Es versteht sich jedoch, dass bei größeren Arbeitsbreiten auch drei oder vier Verstellelemente 17 von demselben Hydraulikzylinder 18 verstellt werden können. Hierzu kann das Gestänge 19 bzw. die Kolbenstangen 20 entsprechend verlängert werden und mit drei, vier oder mehr Keilstellflächen gekoppelt sein.

Der Hydraulikzylinder 18 kann am Aggregatsträger 6 oder einer daran befestigten Konsole kraftübertragend, bspw. starr oder drehbar, jedoch linear fest, befestigt sein, so dass die Kolbenstangenkräfte am Aggregatsträger 6 abgestützt werden. Alternativ könnte der Hydraulikzylinder 18 auch Fahrwerksträger 15 oder einer daran befestigten Konsole kraftübertragend, bspw. starr oder drehbar, jedoch linear fest, befestigt sein, so dass die Kolbenstangenkräfte am Fahrwerksträger 15 abgestützt werden.

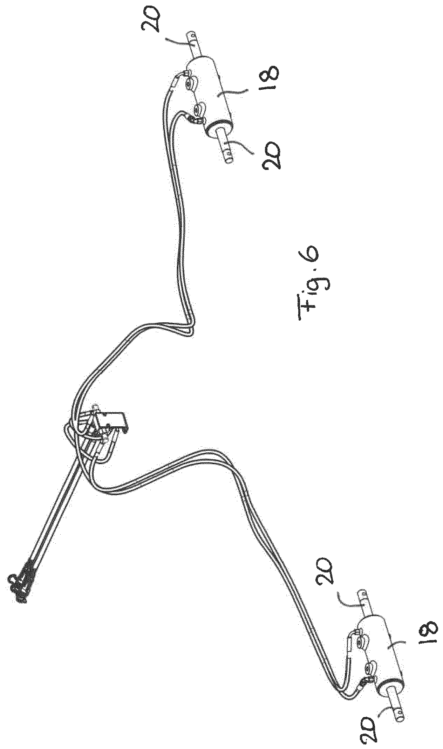

Wie Fig. 6 verdeutlicht, können die Hydraulikzylinder 18 der mehreren Aggregats- und Fahrwerksteile in Form der Seitenflügel 9 und 10 hydraulisch miteinander zwangsgekoppelt werden, derart, dass die beiden Hydraulikzylinder 18 sich synchron miteinander verstellen. Insbesondere kann eine Master-Slave-Verschaltung der Hydraulikzylinder 18 der verschiedenen Maschinenteile vorgesehen sein.

## Patentansprüche

1. Landwirtschaftliche Arbeitsmaschine mit zumindest einem Arbeitsaggregat (4), zumindest einem Abstützfahrwerk (7) zur Tiefenführung des Arbeitsaggregats (4), sowie einer hydraulischen Arbeitstiefen-Einstellvorrichtung (16) zum Einstellen der Arbeitstiefe des Arbeitsaggregats (4) durch Höhenverstellen von Abstützfahrwerk (7) und Arbeitsaggregat (4) relativ zueinander, wobei über die Arbeitsbreite des Arbeitsaggregats (4) verteilt zumindest zwei voneinander beabstandete Verstellelemente (17) zum Höhenverstellen von Abstützfahrwerk (7) und Arbeitsaggregat (4) relativ zueinander vorgesehen sind, **dadurch gekennzeichnet, dass** die hydraulische Arbeitstiefen-Einstellvorrichtung (16) einen Hydraulikzylinder (18) aufweist, der zum Betätigen der zumindest zwei Verstellelemente (17) über ein Gestänge (19) mit den zumindest zwei Stellelementen (17) verbunden ist, **dadurch gekennzeichnet, dass** der Hydraulikzylinder (18) sich in einer abgesenkten Arbeitsstellung des Arbeitsaggregats (4) liegend quer zur Fahrtrichtung erstreckt und das Gestänge (19) mit den Stellelementen (17) jeweils über eine Getriebestufe (21) verbunden ist, die Stellbewegungen des Gestänges (19) liegend quer zur Fahrtrichtung in Auf- und Abbewegungen der Stellelemente (17) umsetzen.

2. Landwirtschaftliche Arbeitsmaschine nach dem vorhergehenden Anspruch, wobei die Getriebestufen (21) jeweils eine Keilstellfläche (22) zum Umsetzen der liegenden Gestängebewegung in eine Auf- und Abbewegung der Stellelemente (17) aufweisen.

3. Landwirtschaftliche Arbeitsmaschine nach dem vorhergehenden Anspruch, wobei die Keilstellfläche (22) spitzwinklig zur Bewegungsrichtung des Gestänges (19) geneigt ausgerichtet ist und/oder sich in einer aufrechten Ebene erstreckt, die parallel zur Bewegungsrichtung des Gestänges (19) und/oder der Bewegungsrichtung des Hydraulikzylinders (18) ausgerichtet ist.

4. Landwirtschaftliche Arbeitsmaschine nach einem der vorhergehenden Ansprüche, wobei der Hydraulikzylinder (18) als Gleichlaufzylinder ausgebildet ist, der zwei zu gegenüberliegenden Seiten hin vorspringende Kolbenstangen (20) aufweist, von denen jede mit zumindest einem anderen Stellelement (17) verbunden ist.

5. Landwirtschaftliche Arbeitsmaschine nach dem vorhergehenden Anspruch, wobei jede Kolbenstange (20) direkt mit einem Schlittenstück gekoppelt ist, das in der abgesenkten Arbeitsposition des Arbeitsaggregats (6) liegend quer zur Fahrtrichtung verschieblich geführt ist und eine Keilstellfläche aufweist.

6. Landwirtschaftliche Arbeitsmaschine nach einem der beiden vorhergehenden Ansprüche, wobei die Kolbenstangen (20) starr mit einem gemeinsamen Kolben verbunden sind und der Gleichlaufzylinder zwei gleich große Ringkammern aufweist, durch deren Beaufschlagung die beiden Kolbenstangen wahlweise gemeinsam in eine erste Richtung oder in eine zweite entgegengesetzte Richtung verfahrbar sind.

7. Landwirtschaftliche Arbeitsmaschine nach einem der vorhergehenden Ansprüche, wobei das Gestänge (19) von der Kolbenstange des Hydraulikzylinders (18) gebildet ist.

8. Landwirtschaftliche Arbeitsmaschine nach einem der Ansprüche 1 bis 6, wobei das Gestänge (19) separat von der Kolbenstange des Hydraulikzylinders (18) ausgebildet und mit der genannten Kolbenstange durch ein Zwischenstück verbunden ist derart, dass das Gestänge durch Ein- und Ausfahrbewegungen der Kolbenstange verschiebbar ist.

9. Landwirtschaftliche Arbeitsmaschine nach einem der vorhergehenden Ansprüche, wobei der Hydraulikzylinder (18) zwischen und parallel zu Aggregats- und Abstützfahrwerksträgern (6, 15) angeordnet ist, wobei an dem Aggregatsträger (6) Arbeitswerkzeuge (5) des Arbeitsaggregats (4) aufgehängt sind und an dem Fahrwerksträger (15) Bodenabstützelemente des Abstützfahrwerks aufgehängt sind.

10. Landwirtschaftliche Arbeitsmaschine nach einem der vorhergehenden Ansprüche, wobei das Arbeitsaggregat (4) und das Abstützfahrwerk (7) in mehrere Aggregats- und Fahrwerksteile, in Form von Seitenflügeln (9, 10) unterteilt sind, wobei zumindest zwei Aggregats- und Fahrwerksteilen zumindest zwei Hydraulikzylinder (18) zum Einstellen der Arbeitstiefe des jeweiligen Aggregatsteils zugeordnet sind, wobei die genannten Hydraulikzylinder (18) miteinander hydraulisch zwangsgekoppelt sind derart, dass eine Stellbewegung eines Hydraulikzylinders eine Stellbewegung des anderen Hydraulikzylinders erzwingt und die Hydraulikzylinder (18) synchron zueinander verfahren.

11. Landwirtschaftliche Arbeitsmaschine nach dem vorhergehenden Anspruch, wobei jeder der genannten Hydraulikzylinder (18) zumindest zwei Verstellelemente (17) verstellt.

12. Landwirtschaftliche Arbeitsmaschine, nach einem der vorhergehenden Ansprüchen, die als Bodenbearbeitungsgerät ausgebildet ist, dessen Arbeitsaggregat (4) Bodenbearbeitungswerkzeuge umfasst in Form von Grubber- und/oder Eggenwerkzeugen.

## Claims

1. Agricultural machine having at least one working assembly (4), at least one support chassis (7) for depth guidance of the working assembly (4), and a hydraulic working depth setting device (16) for setting the working depth of the working assembly (4) by adjusting the height of the support chassis (7) and the working assembly (4) relative to one another, wherein at least two mutually spaced adjusting elements (17) for adjusting the height of the support chassis (7) and the working assembly (4) relative to one another are provided, distributed across the working width of the working assembly (4), **characterised in that** the hydraulic working depth setting device (16) has a hydraulic cylinder (18), which is connected via a linkage (19) to the at least two adjusting elements (17) for the purpose of actuating the at least two adjusting elements (17),
**characterised in that** in a lowered working position of the working assembly (4), the hydraulic cylinder (18) extends horizontally and transversely to the direction of travel and the linkage (19) is connected to each adjusting element (17) via a gear stage (21), which converts adjusting movements of the linkage (19) horizontally and transversely to the direction of travel into up and down movements of the adjusting elements (17).

2. The agricultural machine according to the preceding claim, wherein the gear stages (21) each have a wedge surface (22) for converting the horizontal linkage movement into an up and down movement of the adjusting elements (17).

3. The agricultural machine according to the preceding claim, wherein the wedge surface (22) is inclined at an acute angle to the direction of motion of the linkage (19) and/or extends in a vertical plane which is parallel to the direction of motion of the linkage (19) and/or to the direction of motion of the hydraulic cylinder (18).

4. The agricultural machine according to one of the preceding claims, wherein the hydraulic cylinder (18) is configured as a synchronised cylinder having two piston rods (20) projecting towards opposite sides, each of which is connected to at least one other adjusting element (17).

5. The agricultural machine according to the preceding claim, wherein each piston rod (20) is coupled directly to a slide piece which, when the working assembly (6) is in the lowered working position, is guided so as to be displaceable horizontally and transversely to the direction of travel and has a wedge surface.

6. The agricultural machine according to one of the two preceding claims, wherein the piston rods (20) are rigidly connected to a common piston and the synchronised cylinder has two equally sized annular chambers, the impingement of which enables the two piston rods to be optionally moved together in a first direction or in a second, opposite direction.

7. The agricultural machine according to one of the preceding claims, wherein the linkage (19) is formed by the piston rod of the hydraulic cylinder (18).

8. The agricultural machine according to one of claims 1 to 6, wherein the linkage (19) is configured separately from the piston rod of the hydraulic cylinder (18) and is connected to said piston rod by means of an intermediate piece in such a way that the linkage is displaceable by retraction and extension movements of the piston rod.

9. The agricultural machine according to one of the preceding claims, wherein the hydraulic cylinder (18) is arranged between and parallel to assembly and support chassis frames (6, 15), wherein work tools (5) of the working assembly (4) are suspended from the assembly frame (6) and ground support elements of the support chassis are suspended from the chassis frame (15).

10. The agricultural machine according to one of the preceding claims, wherein the working assembly (4) and the support chassis (7) are subdivided into a plurality of assembly and chassis parts, in the form of side wings (9, 10), wherein at least two hydraulic cylinders (18) for adjusting the working depth of the respective assembly part are assigned to at least two assembly and chassis parts, wherein said hydraulic cylinders (18) are positively coupled to one another by hydraulic means in such a way that an adjusting movement of one hydraulic cylinder forces an adjusting movement of the other hydraulic cylinder and the hydraulic cylinders (18) move synchronously with one another.

11. The agricultural machine according to the preceding claim, wherein each of said hydraulic cylinders (18) adjusts at least two adjusting elements (17).

12. The agricultural machine according to one of the preceding claims, which is configured as a soil tillage implement, the working assembly (4) of which comprises soil tillage tools in the form of cultivator and/or harrow tools.

## Revendications

1. Machine de travail agricole avec au moins un groupe de travail (4), au moins un châssis d'appui (7) pour le guidage en profondeur du groupe de travail (4), ainsi qu'un dispositif hydraulique d'ajustement de la profondeur de travail (16) pour l'ajustement de la profondeur de travail du groupe de travail (4) par réglage en hauteur du châssis d'appui (7) et du groupe de travail (4) l'un par rapport à l'autre, au moins deux éléments de réglage (17) espacés l'un de l'autre étant prévus, répartis sur la largeur de travail du groupe de travail (4), pour le réglage en hauteur du châssis d'appui (7) et de l'unité de travail (4) l'un par rapport à l'autre, **caractérisé en ce que** le dispositif hydraulique d'ajustement de la profondeur de travail (16) présente un vérin hydraulique (18) qui, pour actionner les au moins deux éléments de réglage (17), est relié aux au moins deux éléments de réglage (17) par l'intermédiaire d'une tringlerie (19), **caractérisé en ce que** le vérin hydraulique (18) s'étend horizontalement transversalement à la direction de marche dans une position de travail abaissée du groupe de travail (4) et la tringlerie (19) est reliée aux éléments de réglage (17) respectivement par l'intermédiaire d'un étage de transmission (21) qui transforme les mouvements de réglage de la tringlerie (19) horizontalement transversalement à la direction de marche en mouvements de montée et de descente des éléments de réglage (17).

2. Machine agricole selon la revendication précédente, dans laquelle les étages de transmission (21) présentent chacun une surface de réglage en coin (22) pour transformer le mouvement de tringlerie horizontal en un mouvement de montée et de descente des éléments de réglage (17).

3. Machine agricole selon la revendication précédente, dans laquelle la surface de réglage en coin (22) est orientée inclinée à un angle aigu par rapport à la direction de déplacement de la tringlerie (19) et/ou s'étend dans un plan vertical orienté parallèlement à la direction de déplacement de la tringlerie (19) et/ou à la direction de déplacement du vérin hydraulique (18).

4. Machine agricole selon l'une quelconque des revendications précédentes, dans laquelle le vérin hydraulique (18) est réalisé en tant que vérin synchronisé qui présente deux tiges de piston (20) faisant saillie vers des côtés opposés, dont chacune est reliée à au moins un élément de réglage (17) différent.

5. Machine agricole selon la revendication précédente, dans laquelle chaque tige de piston (20) est directement couplée à une pièce de chariot qui est guidée en translation horizontalement transversalement à la direction de marche, dans la position de travail abaissée du groupe de travail (6), et qui présente une surface de réglage en coin.

6. Machine agricole selon l'une quelconque des deux revendications précédentes, dans laquelle les tiges de piston (20) sont reliées rigidement à un piston commun et le vérin synchronisé présente deux chambres annulaires de même taille, dont la sollicitation permet de déplacer les deux tiges de piston au choix ensemble dans une première direction ou dans une deuxième direction opposée.

7. Machine agricole selon l'une quelconque des revendications précédentes, dans laquelle la tringlerie (19) est formée par la tige de piston du vérin hydraulique (18).

8. Machine agricole selon l'une quelconque des revendications 1 à 6, dans laquelle la tringlerie (19) est réalisée séparément de la tige de piston du vérin hydraulique (18) et est reliée à ladite tige de piston par une pièce intermédiaire, de telle sorte que la tringlerie peut être déplacée par des mouvements de rétraction et d'extension de la tige de piston.

9. Machine agricole selon l'une quelconque des revendications précédentes, dans laquelle le vérin hydraulique (18) est agencé entre et parallèlement aux supports du groupe et du châssis d'appui (6, 15), dans laquelle des outils de travail (5) du groupe de travail (4) sont suspendus au support du groupe (6) et des éléments d'appui au sol du châssis d'appui sont suspendus au support du châssis (15).

10. Machine agricole selon l'une quelconque des revendications précédentes, dans laquelle le groupe de travail (4) et le châssis d'appui (7) sont divisés en plusieurs parties de groupe et de châssis, sous forme d'ailes latérales (9, 10), au moins deux vérins hydrauliques (18) étant associés à au moins deux parties de groupe et de châssis pour ajuster la profondeur de travail de la partie de groupe respective, lesdits vérins hydrauliques (18) étant couplés hydrauliquement de manière forcée les uns aux autres de telle sorte qu'un mouvement de réglage d'un vérin hydraulique force un mouvement de réglage de l'autre vérin hydraulique et que les vérins hydrauliques (18) se déplacent de manière synchrone les uns par rapport aux autres.

11. Machine agricole selon la revendication précédente, dans laquelle chacun desdits vérins hydrauliques (18) règle au moins deux éléments de réglage (17).

12. Machine agricole selon l'une quelconque des revendications précédentes, qui est réalisée en tant qu'outil de travail du sol dont le groupe de travail (4) comprend des outils de travail du sol sous forme d'outils de cultivateur et/ou de herse.
